Europäisches Patentamt

European Patent Office

Office européen des brevets

(11) Veröffentlichungsnummer: 0 114 681
A2

(12) **EUROPÄISCHE PATENTANMELDUNG**

(21) Anmeldenummer: 84100573.9

(22) Anmeldetag: 20.01.84

(51) Int. Cl.³: B 60 J 5/06

(30) Priorität: 24.01.83 AT 219/83

(43) Veröffentlichungstag der Anmeldung:
01.08.84 Patentblatt 84/31

(84) Benannte Vertragsstaaten:
FR NL SE

(71) Anmelder: Vereinigte Metallwerke Ranshofen-Berndorf AG

A-5282 Braunau am Inn(AT)

(72) Erfinder: Hauer, Kurt
Schelleingasse 9-11/1/4
A-1040 Wien(AT)

(72) Erfinder: Trimmel, Engelbert, Dipl.-Ing.
Margaretenstrasse 150/4
A-1050 Wien(AT)

(74) Vertreter: Hain, Leonhard, Dipl.-Ing.
Tal 18/IV
D-8000 München 2(DE)

(54) Schwenkschiebetür, insbesondere für Fahrzeuge.

(57) Bei einer Schwenkschiebetür, insbesondere für Fahrzeuge, ist das Türblatt (8) mittels eines Laufwagens (5), der auf zwei parallelen Führungsstangen (1) verschiebbar und an dem das Türblatt über einen Tragarm (4) an einer am Laufwagen gelagerten Achse (6) befestigt ist, aufgehängt. Zur Steuerung der Ausschwenkbewegung des Türblattes sind am Tragarm (4) zwei Führungsrollen (3, 3a) im Abstand voneinander angeordnet, die zusammen um die Achse (6) schwenkbar und von der Führungsschiene (11) gesteuert sind, wozu zweckmäßigerweise an der Führungschiene eine Auflaufkante (14) für die Führungsrolle (3) vorgesehen ist.

Fig 2

DIPL. ING. LEONH. HAIN
PATENTANWALT
8 MÜNCHEN 2
TAL 18 - T. 1y 47 98

Anmelder: Vereinigte Metallwerke Ranshofen-Berndorf AG
A-5282 Braunau am Inn

Titel:     Schwenkschiebetür, insbesondere für Fahrzeuge

## Beschreibung

Die Erfindung betrifft eine Schwenkschiebetür, insbesondere für Fahrzeuge, die im Bereich einer Längskante mittels eines Laufwagens auf zwei parallelen, im Querschnitt vorzugsweise kreisrunden Führungsstangen tragend gehalten und geführt ist, wobei das Türblatt an einem Tragarm befestigt ist, der am Laufwagen um eine parallel zur Türblattseitenkante liegende Achse schwenkbar gelagert ist, wobei die Führung des Laufwagens die Stangen vorzugsweise mit Kugelhülsen vollständig umfaßt und zur Steuerung der Bewegung am Tragarm eine Führungsrolle befestigt ist, die in eine Führungsschiene eingreift.

Bei einer Schwenkschiebetür dieser Art (EP-A1-0 008 128) wird die Führungsrolle zweiseitig geführt und benötigt daher ein gewisses Spiel und wegen der hohen Kräfte auch einen entsprechenden Hebelarm, der wiederum Platz beansprucht und seitlich über den Türrahmen hinausreicht, was zu Schwierigkeiten beim Einbau führt.

Der Erfindung liegt daher die Aufgabe zugrunde, die Führung einer Schwenkschiebetür der eingangs genannten Art zu verbessern.

Diese Aufgabe wird an einer solchen Schwenkschiebetür erfindungsgemäß dadurch gelöst, daß am Tragarm eine weitere Führungsrolle im Abstand von der Führungsrolle angeordnet ist, die beide zusammen um die Achse schwenkbar und von der Führungsschiene gesteuert sind.

Weitere Merkmale der Erfindung sind in Unteransprüchen beansprucht.

Durch die erfindungsgemäße Führung der Schwenkschiebetür wird ihre Konstruktion vereinfacht und verkleinert sowie ihr Bewegungsablauf verbessert.

Die Erfindung wird nachfolgend anhand eines Ausführungsbeispieles, das auch in der Zeichnung schematisiert dargestellt ist, näher beschrieben. Es zeigen:

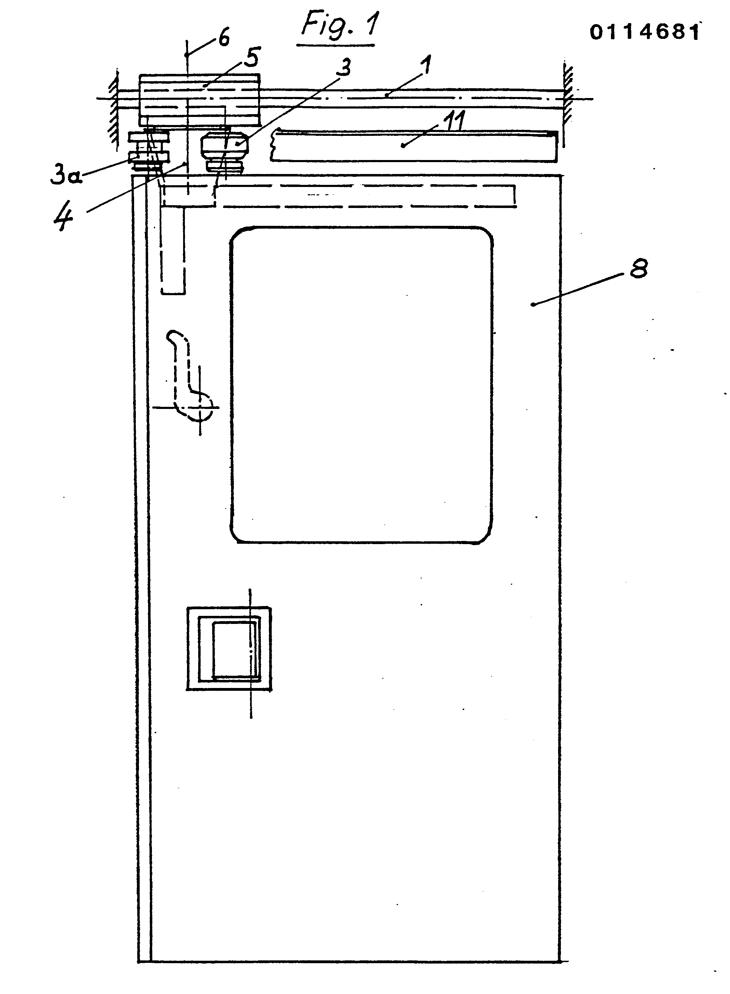

Fig. 1 ein Türblatt im Aufriß,

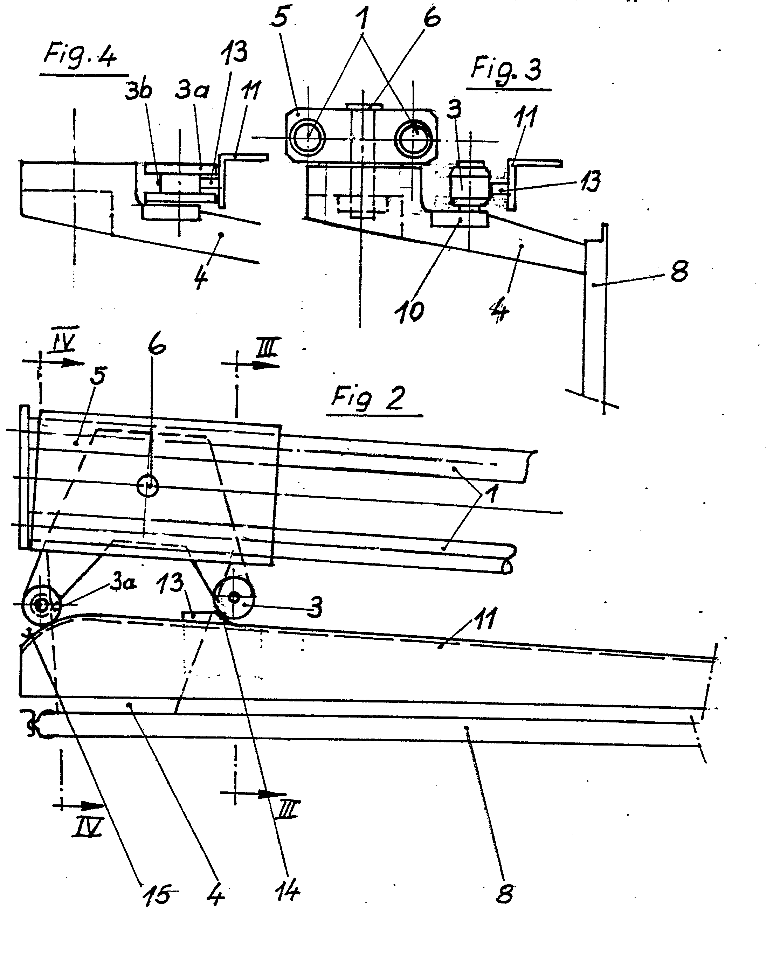

Fig. 2 eine Draufsicht hierzu,

Fig. 3 einen Schnitt nach der Linie III-III und

Fig. 4 einen Schnitt nach der Linie IV-IV der Fig. 2.

Wie die Zeichnung zeigt, ist ein Türblatt 8 eines Eisenbahnwaggons über einen Tragarm 4 an einem Laufwagen 5 um eine Achse 6 schwenkbar befestigt. Der Laufwagen 5 ist auf zwei parallelen Führungsstangen 1 verschieblich gelagert, die sich oberhalb des Türblattes im Wagenkasten befinden. Da das Türblatt bei der Öffnungs- und Schließbewegung nicht nur verschoben, sondern auch quer zur Türebene bewegt werden muß, um aus der Waggonwand herauszuklappen, sind Steuerorgane vorgesehen, welche diese Schwenkbewegung um die Achse 6 beim Öffnen und Schließen bewirken. Zu diesem Zweck ist am Tragarm 4 ein Hebelarm 10 befestigt, der zwei Führungsrollen 3 und 3a im Abstand voneinander trägt. Diese Führungsrollen liegen an einer Führungsschiene 11 an, die sich oberhalb des Türblattes im Wagenkasten befindet und etwa parallel zu den Führungsstangen 1 verläuft. Sie weist jedoch an einem Ende ein zurückspringendes Kurvenstück 15 auf, welches von der Führungsrolle 3a umfahren wird, so daß dadurch eine Verschwenkung des Hebelarmes 10 mit dem Türblatt erfolgt. Während die Führungsrolle 3a auf dem Kurvenstück 15 abläuft, läuft die Führungsrolle 3 auf eine Auflaufkante 14 eines auf der Führungsschiene 11 verstellbar befestigten Einsatzstückes 13 auf, so daß eine Zwangsführung des Hebels 10 gegeben ist, ohne daß Andrückfedern od. dgl. verwendet werden müssen und eine exakte form- und kraftschlüssige Verschwenkung des Hebelarmes 10 und damit des Türblattes 8 erfolgt.

Damit beim Überfahren des Einsatzstückes 13 durch die Führungsrolle 3a dieselbe nicht auf die Auflaufkante 14 aufläuft, ist die Führungsrolle 3a mit einer Nut 3b versehen, die so tief ist wie die Auflaufkante, so daß damit ein glattes Überfahren derselben ermöglicht ist. Die Erfindung ist jedoch nicht auf das dargestellte Ausführungsbeispiel beschränkt, sondern es kann die Führungsrolle 3a auch axial seitlich versetzt sein, so daß sie keine Nut 3b benötigt und ebenso wie die Führungsrolle 3 ausgebildet ist.

0114681

Patentansprüche

1. Schwenkschiebetür, insbesondere für Fahrzeuge, die im Bereich einer Längskante mittels eines Laufwagens (5) auf zwei parallelen, im Querschnitt vorzugsweise kreisrunden Führungsstangen (1) tragend gehalten und geführt ist, wobei das Türblatt (8) an einem Tragarm (4) befestigt ist, der am Laufwagen um eine parallel zur Türblattseitenkante liegende Achse (6) schwenkbar gelagert und zur Steuerung der Bewegung des Tragarmes (4) eine von einer Führungsschiene (11) geführte Führungsrolle (3) vorgesehen ist, dadurch gekennzeichnet, daß am Tragarm (4) eine weitere Führungsrolle (3a) im Abstand von der Führungsrolle (3) angeordnet ist, die beide zusammen um die Achse (6) schwenkbar und von der Führungsschiene (11) gesteuert sind.

2. Schwenkschiebetür nach Anspruch 1, dadurch gekennzeichnet, daß die Führungsschiene (11) eine Auflaufkante (14) für die Führungsrolle (3) aufweist, die von der Führungsrolle (3a) umfahrbar ist.

3. Schwenkschiebetür nach Anspruch 2, dadurch gekennzeichnet, daß die Auflaufkante (14) auf einem an der Führungsschiene (11) zu Justierungszwecken verstellbar befestigten Einsatzstück (13) angeordnet ist.

4. Schwenkschiebetür nach einem der Ansprüche 1 bis 3, dadurch gekennzeichnet, daß die Führungsrolle (3a) zur Umführung der Auflaufkante (14) mit einer Nut (3b) versehen ist.

Fig. 1

0114681

0 114 681

Fig. 4

Fig. 3

Fig 2